# EUROPÄISCHE PATENTSCHRIFT

(11) **EP 3 439 821 B1**
(45) Veröffentlichungstag und Bekanntmachung des Hinweises auf die Patenterteilung: **11.03.2020**
(21) Anmeldenummer: 17737464.2
(22) Anmeldetag: 13.06.2017
(51) Int. Cl.: B23K 20/12

(54) **VORRICHTUNG UND VERFAHREN ZUM VERSCHWEISSEN ZWEIER FÜGEPARTNER MITTELS RÜHRREIBSCHWEISSEN DURCH DIE, BZW. DURCH DAS, KEINERLEI KONTAMINATION DER FÜGEPARTNER DURCH SCHWEISS-RÜCKSTÄNDE ERFOLGT**
DEVICE FOR AND METHOD OF WELDING TOGETHER TWO JOINING PARTNERS BY MEANS OF FRICTION STIR WELDING, WHICH PREVENTS THE JOINING PARTNERS BEING CONTAMINATED BY THE WELDING RESIDUE
DISPOSITIF ET PROCÉDÉ DE SOUDAGE PAR FRICTION-MALAXAGE DE DEUX ÉLÉMENTS À ASSEMBLER, PERMETTANT D'ÉVITER TOUTE CONTAMINATION DES ÉLÉMENTS À ASSEMBLER PAR DES RÉSIDUS DE SOUDAGE

(30) Priorität: 21.06.2016 DE 102016007585
(43) Veröffentlichungstag der Anmeldung: 13.02.2019
(73) Patentinhaber: Grenzebach Maschinenbau GmbH, 86663 Asbach-Baeumenheim (DE)
(72) Erfinder: WEIGL, Markus, 86609 Donauwörth (DE); FEINEIS, Alexander, 86609 Donauwörth (DE)
(74) Vertreter: Kindermann, Peter
(86) Internationale Anmeldenummer: PCT/DE2017/000164
(87) Internationale Veröffentlichungsnummer: WO 2017/220062

(56) Entgegenhaltungen:
- DE-B3-102012 010 836
- JP-A- 2004 337 860
- JP-A- 2007 029 979

## Beschreibung

Die Erfindung betrifft eine Vorrichtung und ein Verfahren zum Verschweißen zweier Fügepartner mittels Rührreibschweißen gemäß dem Oberbegriff der Ansprüche 1 und 6, durch die, bzw. durch das, keinerlei Kontamination der Fügepartner durch Schweiß-Rückstände erfolgt.

Beim Rührreibschweißen wird im Fügebereich der zu verschweißenden Materialien mittels der Reibung zwischen einem rotierenden, gleichzeitig translatorisch bewegten und mit Druck aufgebrachten, Werkzeug Reibungswärme erzeugt, die die zu verschweißenden Materialien in einen plastifizierten Zustand versetzt. Das Werkzeug wird hierbei entlang des Fügebereichs bewegt und verrührt das plastifizierte im Inneren der Naht der zu verbindenden aneinander stoßenden Materialien. Am Ende dieser Naht wird das Werkzeug aus dem Verbindungsbereich herausgezogen und die Schweißnaht ist unmittelbar belastbar.
Es ist aus dem Stand der Technik zum Thema des Rührreibschweißens unter anderen die vorveröffentlichte, auf die Anmelderin selbst zurückgehende, DE 10 2015 005 763 U1 bekannt, die eine Vorrichtung zum homogenen Verschweißen flächig gebogener Strukturen durch Rührreibschweißen betrifft. Mit der aus dieser Druckschrift bekannten Vorrichtung ist zwar schon ein Schweißergebnis zu erzielen das hohen Qualitätsansprüchen genügt, jedoch kann hierbei nicht völlig ausgeschlossen werden, dass beim Herausziehen des Schweißpins während der Beendigung des Schweißvorgangs geringe Unebenheiten zu verzeichnen sind. Zudem muss damit gerechnet werden, dass die Ränder der zu verschweißenden Strukturen nicht fugenlos aneinander stoßen sondern kleine Unebenheiten aufweisen die während des Schweiß-Vorgangs für das Erreichen einer ebenen Fläche die Zufuhr von "Füll-Material" notwendig machen.
Ferner sind aus der, ebenfalls auf die Anmelderin zurückgehenden, DE 10 2012 010 836 B3 (Stand der Technik) ein Verfahren und eine Vorrichtung zur Verbesserung der Qualität der Schweißnaht beim Rührreibschweißen bekannt. Dieser Druckschrift liegt die Aufgabe zugrunde, die Standzeit des Rührreibwerkzeugs von ca. 2 Stunden auf 15 Stunden zu erhöhen und die Qualität der Fügenaht so zu erhöhen, dass keinerlei Nachbearbeitung erforderlich ist.

Gelöst wird diese Aufgabe mittels einer Vorrichtung mit den folgenden Merkmalen:
a) einer Aufnahmeplatte (1) mit einem Antriebskopf (2) und einem Spindellager (4) zur Aufnahme einer Reibschweißspitze (9), wobei im Spindellager (4) eine spiralförmig ausgearbeitete Transportschnecke (6) die zum Abtransport von nicht benötigtem Material-Auftrag dient, in schräg nach außen führende Öffnungen (8) mündet,
b) die Längsachse des Spindellagers (4) ist gegen die Vertikale in einem Winkel von 2,8 bis 3,2 Grad geneigt,
c) die Gleitfläche der Drehspindel besteht aus einer ebenen Gleitfläche (10) und besonders zur Verschweißung von kurvenförmigen Nähten aus jeweils einer, auf zwei gegenüber liegenden Seiten anschließenden, zur Gleitfläche (11) in einem spitzen Winkel geneigten, in sich gewölbten Gleitfläche (11),
d) die Reibschweißspitze (9) weist die Form eines Kegelstumpfes auf, bei dem die Deckfläche in der Mitte erhöht ist, und wobei die Mantelfläche des Kegelstumpfes durch sechs trapezförmige Flächenstücke gebildet wird, von denen drei Flächenstücke jeweils am Umfang gleichmäßig verteilt sich in einem Winkel von 120 Grad gegenüber liegen und einen größeren Anteil als 1/6 am Kreisumfang beanspruchen.

Zum Stand der Technik wird weiter auf die EP 2 561 948 A1 verwiesen, die ein Verfahren und eine Anlage zum Herstellen eines Flansch-Rohr-Flansch-Elements mittels Rührreibschweißens betrifft. Einer solchen Anlage liegt die Zielsetzung zugrunde, das Zentrieren von Flansch und Rohr zu vereinfachen und die Schweißbadsicherung neben dem Abstützen des durch das Rührreibschweißen erweichten Bereichs auch zur Aufnahme der Anpresskräfte beim Rührreibschweißen und zum Zentrieren des Rohres nach der Längsachse der Flansche unter Wegfall von Mess- und Einrichtvorgängen bei gleichzeitiger Reduzierung der Fertigungszeiten, unter Einsparung von Material und Gewährleistung wirtschaftlicher Vorteile zu nutzen. Hierzu wird beansprucht, dass die Schweißbadsicherung als eine pneumatisch spann- und lösbare Spann- und Abstützscheibe zum Zentrieren des Rohres auf die Drehachse der Flansche und zum Aufnehmen der Anpresskräfte beim Rührreibschweißen ausgebildet ist, und dass ein Sensor zum Abtasten der Stoßfugen zwischen Rohr und Flansch vorgesehen ist, und dass weiter eine Vorrichtung zum An- und Abfahren eines Formkeils in Flucht der horizontal oberhalb der Drehachse liegenden, durch die Stoßfuge verlaufenden Tangentialebene vorgesehen ist, um den Rührreibschweißstift des Rührreibschweißwerkzeugs lochfrei aus der rührreibgeschweißten Stoßfuge herauszubewegen, wobei der Sensor und die Vorrichtung zum An- und Abfahren des Formkeils mit der Steuerung verbunden ist.

Aus der Druckschrift JP 2007 029979 A ist ein Zweifach-Rotationswerkzeug zum Rührreibschweißen bekannt, wobei ein Abriebmaterial durch eine Schnecke oder ein Schleifrad, das nicht in den Kopf des Werkzeugs integriert ist, abgeführt wird.

Schließlich offenbart die Druckschrift JP 2004 337860 A eine Vorrichtung und ein Verfahren zum Rührreibschweißen, wobei durch einen Temperatursensor in einer Werkzeugglocke eine kontrollierte Temperaturerhöhung an einer Schweißnaht realisiert werden kann.

Der Erfindung liegt die Aufgabe zugrunde, ein Verfahren und eine Vorrichtung zum Verschweißen zweier Fügepartner mittels Rührreibschweißen weiter zu verbessern.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 6 gelöst.

In den Unteransprüchen sind weitere vorteilhafte Ausgestaltungen der Erfindung gekennzeichnet.

Die erfindungsgemäße Vorrichtung wird im Folgenden näher beschrieben:
Es zeigen im Einzelnen:
Fig.1 eine perspektivische Darstellung des Schweißkopfs;
Fig.2 einen Schnitt durch den Schweißkopf der Fig.1;
Fig.3a einen Schnitt durch die Werkzeugglocke;
Fig.3b einen Schnitt durch den unteren Teil der Werkzeugglocke;
Fig.3c eine perspektivische Ansicht des unteren Teils der Werkzeugglocke ohne den Schweiß- und Glättschuh 10;
Fig.4a einen Schnitt durch den unteren Teil der Werkzeugglocke mit oben liegendem Schneidblatt 17;
Fig. 4b einen Schnitt durch den unteren Teil der Werkzeugglocke mit unten liegendem Schneidblatt 17;
Fig.4c einen Schnitt durch den unteren Teil der Werkzeugglocke mit unten Schneidblatt 17 im Bereich des Pinschafts;
Fig.5 einen Schnitt durch die Einheit 7 zur Achsial-Verstellung der Werkzeugglocke;
Fig.6 eine perspektivische Darstellung der Achsial-Verstellung 7;
Fig.7a einen Schnitt durch einen Reinigungsvorgang mit Hub von oben;
Fig.7b einen Schnitt durch einen Reinigungsvorgang mittels Hub von unten; und
Fig. 8 einen Schnitt durch die Werkzeugglocke mit der Darstellung mehrerer Funktionen.

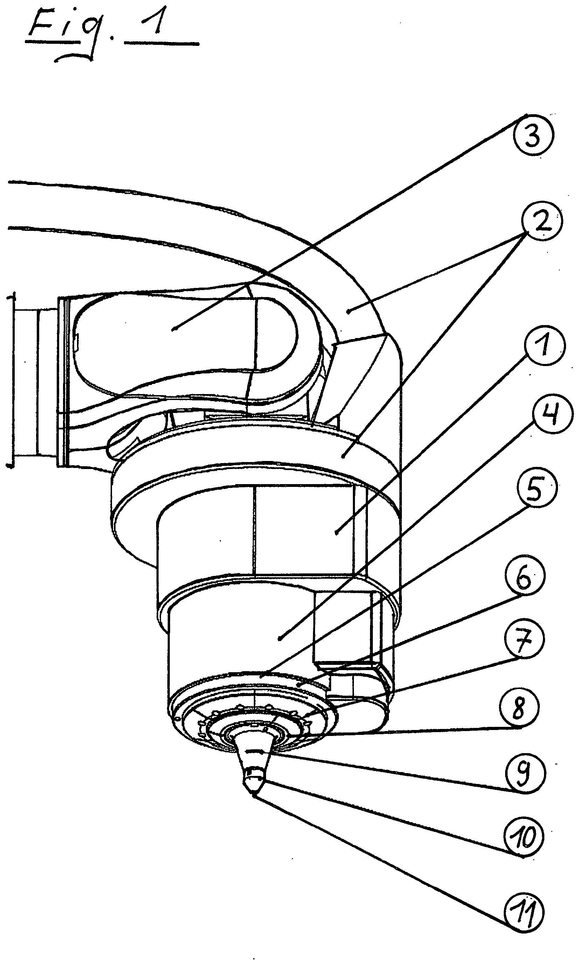

Die Fig.1 zeigt eine perspektivische Darstellung des erfindungsgemäßen gesamtheitlichen Schweißkopfs.

Der Begriff "gesamtheitlich" wurde deshalb gewählt weil die gesamte Prozessdatenerfassung und Prozesssteuerung im Schweißkopf integriert ist. Die Spindel ist gewissermaßen ein "sich drehender Werkzeughalter", wobei der Schweißkopf in beliebige Maschinen integrierbar ist. Auf der rechten Seite sind in dieser Fig.1 die Steuerleitung und die Energieversorgungsleitung 2 für die Antriebseinheit der Spindel zu erkennen, wobei der gesamte Schweißkopf zum Beispiel von einem Roboter 3 geführt sein kann und das Spindelgetriebe 4 an seiner Unterseite einen Montageflansch 5 aufweist.Unterhalb des Montageflanschs 5 ist ein Sensorring 6 angeordnet der zum Beispiel Sensoren zur Kraftmessung. Der Messung direkter Prozessparameter und / oder zur Schwingungsmessung trägt. Zur direkten Messung der an der Schulter entstehenden Schwingungen sind Messköpfe zwischen der Spindel und dem Schweißkopf angeordnet. Hieraus resultieren weniger Fehlereinwirkungen zum Beispiel durch eine Unwucht in der Spindel.
Unterhalb des Sensorrings 6 ist eine Einheit 7 zur Achsial - Verstellung der Werkzeugglocke gelagert. Sie ermöglicht eine präzise Verlagerung der Werkzeugglocke in achsialer Richtung-.Es folgen weiter ein Spannsystem 8 für das Schweißwerkzeug mit einer Werkzeugglocke 9 und einem Schweiß - und Glättschuh 10 und seinem Schweißpin11.

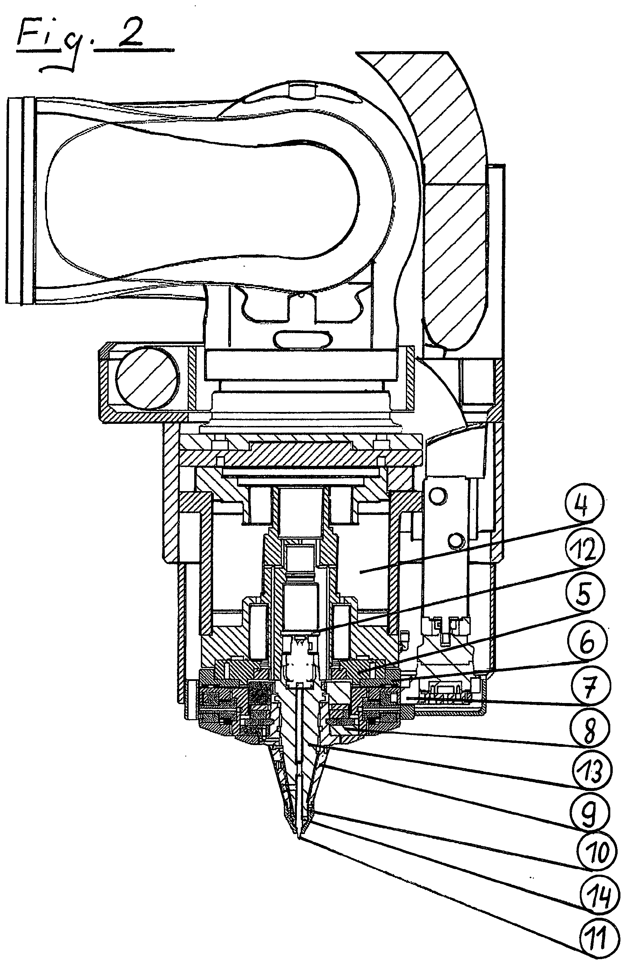

Die Fig.2 zeigt einen Schnitt durch den Schweißkopf der Fig.1.
Hier sind auf der rechten oberen Bereich das über den Querschnitt verlaufende Spindelgetriebe 4 und der quer zum Spindelgewinde sich erstreckende Montageflansch 5 aus der Fig.1 bezeichnet. Unterhalb des Montageflanschs 5 ist der innere Bereich des Sensorrings 6 zu erkennen, während unter diesem angeordnet die Bauteile der Einheit 7 zur Achsial - Verstellung im Querschnitt zu sehen sind. Die zentral gelagerte Werkzeugglocke 9 wird von dem Spannsystem 8 für das Schweißwerkzeug umschlossen. In der Rotationsachse der Werkzeugglocke 9 ist eine Spindel 12 gelagert die in ihrer Verlängerung durch einen Werkzeugschaft 13 in der Werkzeugglocke 9 verläuft und an ihrem Ende einen Schweißpin 11 trägt. Der Schweißpin 11 ist in einem Schweiß - und Glättschuh 10 geführt.
In dem Schweiß - und Glättschuh 10 ist im linken Seitenbereich eine Einrichtung 14 zum Zerkleinern, bzw. zum Zerspanen des Abriebs während des Rühreibschweiß - Prozesses angedeutet.

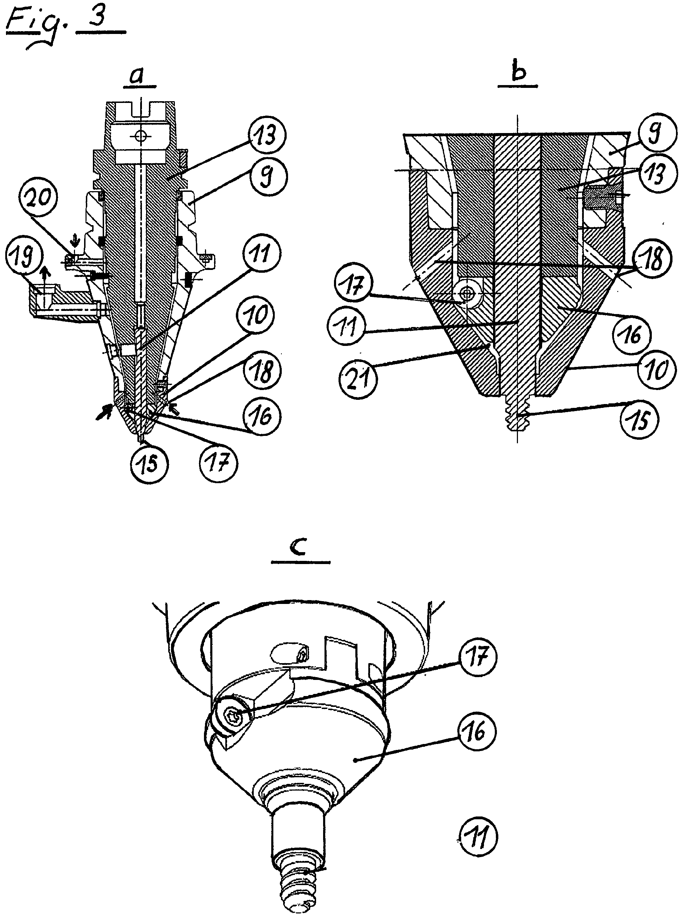

Die Fig.3a zeigt einen Schnitt durch die Werkzeugglocke.

Neben der Werkzeugglocke 9 mit dem innenliegenden Werkzeugschaft 13 und dem Schweißpin 11 mit seiner Pinspitze 15 sind hier im Schweiß - und Glättschuh 10 auf der hier gezeigten linken und rechten Seite des Schweiß - und Glättschuhs 10 so genannte untere Einströmkanäle 18 für Fluid dargestellt. Diese unteren Einströmkanäle 18 können natürlich ringsum am Schweiß - und Glättschuh 10 verteilt sein und dienen der Zufuhr von Fluid zum Ausspülen von Abrieb oder Prozessüberschußmaterial der während des Prozesses des Rührreibschweißens entstanden ist. Diese Einströmkanäle 18 sind lediglich schematisch und beispielhaft dargestellt. Die Einströmkanäle 18 am Schweiß -und Glättschuh 10 haben auch eine strömungsgebende Funktion für das einströmende Fluid.
Die in der Fig.2 gezeigte Einrichtung 14 zum Zermahlen , bzw. Zerspanen,, genauer zum Zerkleinern, dieses Abriebs ist in dieser Fig.3a gekennzeichnet durch einen Schneidblatt - Halter 16 dieser Einrichtung mit einem zugehörigen Schneidblatt 17. Vorrichtungen zur Zufuhr von Fluid in den oder die Einströmkanäle 18 sind hier aus Gründen einer deutlichen Darstellung nicht gezeigt.
Auf der linken Seite der Werkzeugglocke 9 sind ein Absaugkanal 19 für Fluid und ein oberer Einströmkanal 20 für Fluid zu erkennen.
Die Fig.3b zeigt einen Schnitt durch den unteren Teil der Werkzeugglocke in vergrößertem Maßstab. Auch hier ist im oberen Bereich die Werkzeugglocke 9 bezeichnet mit dem innenliegenden Werkzeugschaft 13 und dem zentral geführten Schweißpin 11 und seiner Pinspitze 15.Die ebenfalls in der Fig. 3a gezeigten beiden Einströmkanäle 18 für Fluid sind hier noch deutlicher dargestellt. Besonders deutlich sind in dieser Fig.3b der Schneidblatt - Halter 16 mit seinem Schneidblatt 17 zu erkennen. Im unteren Bereich des dargestellten Schweißpins 11 ist in der Fig.3b im Schweiß - und Gleitschuh 10 auf der linken Seite ein Spalt 21 für Abrieb - Material zu sehen.
Die Fig.3c zeigt eine perspektivische Ansicht des unteren Teils der Werkzeugglocke ohne die behindernde Sicht auf den Schweiß - und Glättschuh 10. Der auf den Schweißpin 11 ringförmig aufgesetzte Schneidblatt - Halter 16 mit dem von ihm gehalterten ,bzw. gelagerten Schneidblatt 17 der Einrichtung zum Zermahlen, bzw. zum Zerspanen, oder allgemein gesprochen, Zerkleinern des während des Reibschweißens entstehenden Abriebs ist hier deutlich auszumachen.

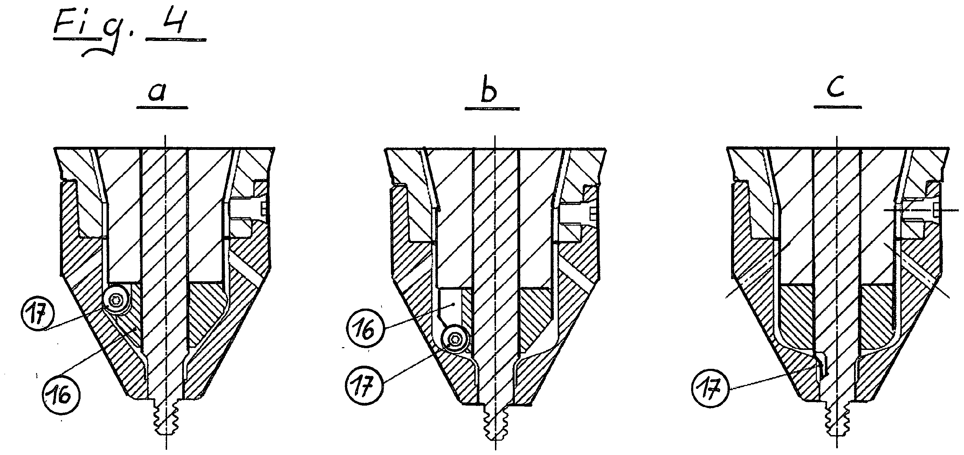

Die Figuren 4a, 4b und 4c stellen verschiedene Möglichkeiten der Anordnung eines Schneidblatts 17 im Bereich des Schweiß - und Glättschuhs dar. Die Form des Schneidblatts 17 ist hier nur beispielhaft dargestellt, sie kann auch dreieckig, quadratisch oder von beliebiger geometrischer Form sein.
Die Fig.4a zeigt einen Schnitt durch den unteren Teile der Werkzeugglocke mit oben liegendem Schneidblatt 17 im Schneidblatt - Halter 16.
Die Fig. 4b einen Schnitt durch den unteren Teil der Werkzeugglocke mit unten liegendem Schneidblatt 17 im Schneidblatt - Halter 16.
Die Fig.4c einen Schnitt durch den unteren Teil der Werkzeugglocke mit unten Schneidblatt 17 im Bereich des Pinschafts.
Sämtliche dargestellten Schneiden - Positionen sind beliebig miteinander kombinierbar. Es kann somit auch Kombinationen zwischen axialen und radialen Schneiden oder Zerkleinern geben.

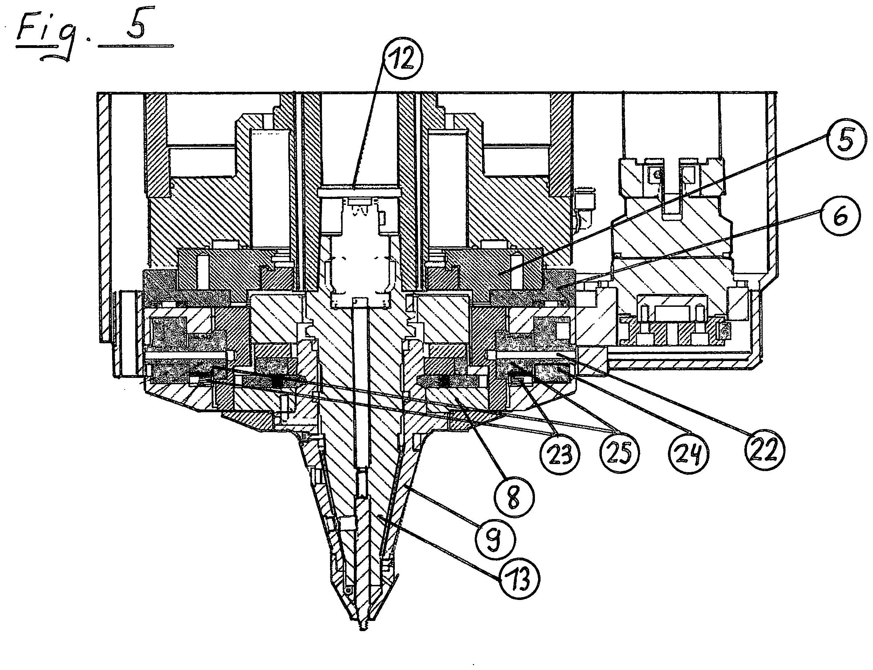

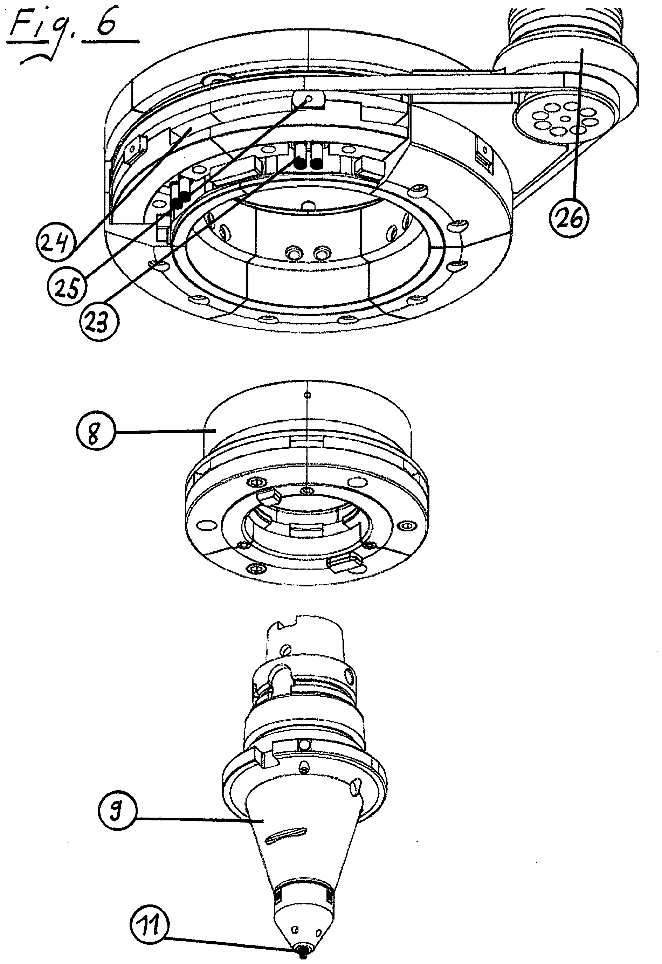

Die Fig.5 zeigt einen Schnitt durch die Einheit 7 zur Achsial - Verstellung der Werkzeugglocke.In der Mittelachse Antriebseinheit des gesamtheitlichen Schweißkopfs ist die Spindelachse 12 im Werkzeugschaft 13 innerhalb des oberen Teils der Werkzeugglocke 9 zu erkennen .Rotationssymmetrisch zur Spindel 12 ist auf der linken und der rechten oberen Seite der Fig.5 der aus dem oberen Teil der Fig.2 bekannte Montageflansch 5 der das Spindelgetriebe 4 mit dem Sensorring 6 verbindet, zu erkennen, wobei der Sensorring 6 hier auf der rechten Seite bezeichnet ist. Das Spannsystem für die Werkzeugglocke 9 ist rotationssymmetrisch zur Werkzeugglocke 9 auf der linken und der rechten Seite im Schnitt auszumachen. Ebenfalls rotationssymmetrisch auf der linken und der rechten Seite des Spannsystems 8 für das Schweißwerkzeug sind die beiden, im Schnitt sichtbaren, Anteile einer Verstell - Mutter 24 für den Hub der Achsial - Verstellung 7 zu erkennen, wobei auf der linken Seite zu beiden Seiten der Verstell - Mutter 24 zwei Führungs - Elemente 25 bezeichnet sind, von denen mindestens zwei vorhanden sind.. Die im Schnitt jeweils neben den Führungs - Elementen 25 gelagerten Vorspannungs - Elemente 23 erlauben eine stufenlose Verstellung des Hubs zur Achsial - Verstellung der Werkzeugglocke. Nähere Einzelheiten sind der Darstellung der Fig.6 zu entnehmen.Auf der rechten Seite ist ein Kabelkanal 22 zur Signal - Versorgung der Sensoren die zum Werkzeug führen bezeichnet.
Die Fig.6 zeigt eine perspektivische Darstellung der Achsial - Verstellung 7. Hier ist die Achsial - Verstellung 7 in ihrer Lage im gesamtheitlichen Aufbau des erfindungsgemäßen Schweißkopf gesondert dargestellt. Im rechten Vordergrund ist ein Führungselement 25 zu sehen, von dem wegen ihrer Führungsfunktion mindestens zwei vorhanden sein müssen. Diese Führungselemente 25 erfüllen gewissermaßen die Funktion eines Gewindes, während der ringförmige Charakter der Verstellmutter 24 in dieser Darstellung deutlich wird. Weiter sind in der Darstellung der Fig.6 drei Vorspannungs - Elemente 23 sichtbar, von denen das auf der linken Seite gezeigte, bezeichnet ist. Als Antrieb für die gesamte Achsial - Verstellung 7 dient der Verstell - Antrieb 26.

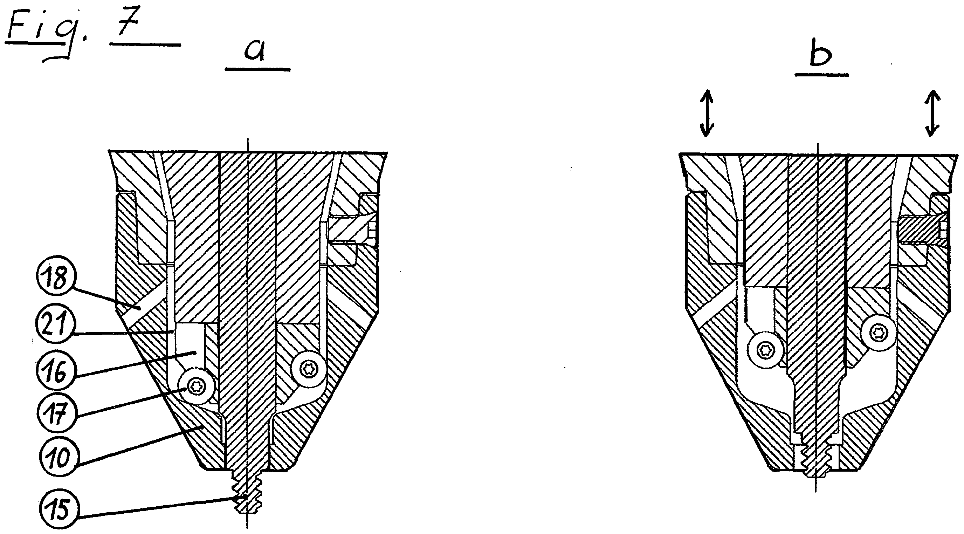

Die Figuren 7 zeigen eine Kombination aus axialen und radialen Schneiden.
Die Fig.7a zeigt einen Schnitt durch einen Reinigungsvorgang mit Hub von oben. Neben dem umfassenden Schweiß - und Glättschuh 10 und der in ihm gelagerten Pinspitze 15, ist hier ein Schneidblatt - Halter 16 mit seinem Schneidblatt 17 zu sehen. Auf der linken Seite des Schneidblatt - Halter 16 ist ein schmaler Spalt, der Spalt 21 für Abrieb - Material, bzw. allgemein gesprochen, zerkleinertes Prozess - Material, gezeigt, der bewirkt, dass dieses Material über einen Spalt 18 mittels einer Hubeinwirkung im oberen Bereich nach außen dringen kann. Der Abtransport des zerkleinerten Materials im Spalt 21 wird durch strömungsbeeinflussende / erzeugende Geometrien gesteuert, die auf der Innenseite der Glocke und auf der Außenseite der Reibstiftaufnahme und dem Schneidblatthalter sitzen.
Die Fig.7b zeigt einen Schnitt durch einen Reinigungsvorgang mittels Hub von unten. In diesem Fall wird durch das Absenken der Werkzeugglocke erreicht, dass das entstandene Prozess - Material vom Schweißpin nach oben, und damit über einen oder mehrere der gezeigten Spalte nach außen dringen kann.

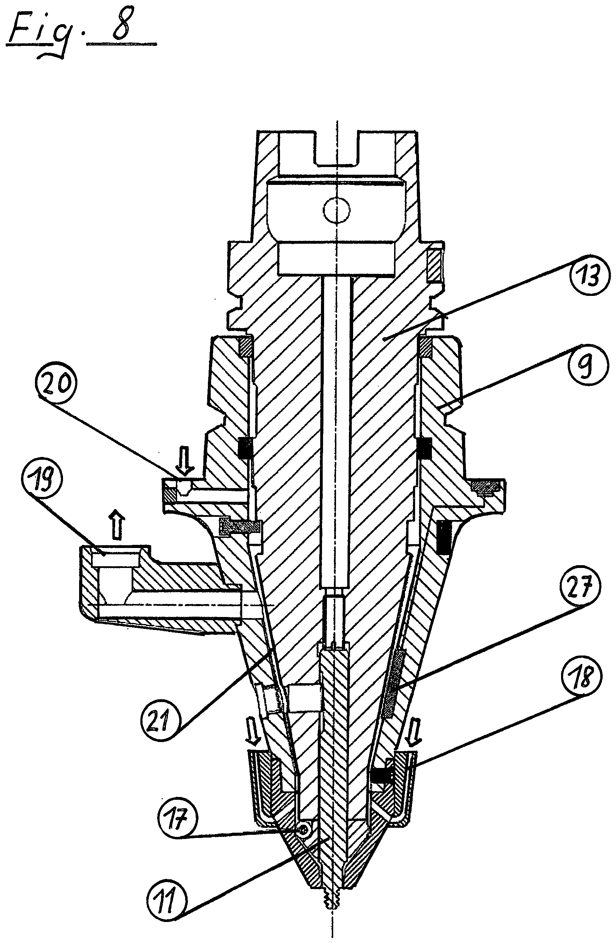

Die Fig. 8 zeigt einen Schnitt durch die Werkzeugglocke mit der Darstellung mehrerer Funktionen.Neben der Werkzeugglocke 9 mit dem Werkzeugschaft 13, dem Schweißpin 11 und dem Schneidblatt 17 mit dem Spalt 21 für Abrieb - Material sind hier auf der linken Seite in der Werkzeugglocke 9 zwei Einströmkanäle für Fluid, nämlich der Einströmkanal 20 im oberen Bereich und der Einströmkanal 18 im unteren Bereich zu sehen. Der größer dimensionierte Absaugkanal 19 ergänzt diese Anlage. Diese Anordnung dient nicht nur dazu, den Abrieb - Transport zu regeln, sondern auch dazu, insgesamt die Betriebstemperatur des gesamten Prozesses während des Rührreibschweißens mittels eines gezeigten Temperatursensors 27 zu regeln.Es ist erfindungsgemäß eine zusätzliche Steuerung der Fluidströmung und der Fluidverteilung durch strömungsbeeinflussende Geometrien auf der Außenseite und im Inneren der Bauteile Werkzeugglocke, Stiftaufnahme, Schweiß - und Gleitschuh, also allen Bauteilen die mit Fluid in Berührung kommen, vorgesehen.

### Bezugszahlenliste

- 1: Antriebseinheit für die Spindel 12
- 2: Steuerleitung und Energieversorgungsleitung
- 3: Roboter
- 4: Spindelgetriebe
- 5: Montageflansch
- 6: Sensorring (Kraftmessung, Schwingungsmessung)
- 7: Einheit zur Achsial - Verstellung der Werkzeugglocke
- 8: Spannsystem für das Schweißwerkzeug
- 9: Werkzeugglocke
- 10: Schweiß - und Glättschuh
- 11: Schweißpin
- 12: Spindel
- 13: Werkzeugschaft (Pinschaft)
- 14: Einrichtung zum Zermahlen, bzw. Zerspanen des Abriebs
- 15: Pinspitze
- 16: Schneidblatt - Halter der Vorrichtung 14 zum Zermahlen, bzw. Zerspanen, allgemein gesprochen, zerkleinern
- 17: Schneidblatt
- 18: Einströmkanal für Fluid (unten)
- 19: Absaugkanal
- 20: Einströmkanal für Fluid (oben)
- 21: Spalt für Abrieb - Material
- 22: Kabelkanal für Sensoren die zum Werkzeug führen
- 23: Vorspannungs - Element der Achsial - Verstellung 7
- 24: Verstell - Mutter für den Hub der Achsial - Verstellung 7
- 25: Führungs - Element (Gewindefunktion)
- 26: Verstell - Antrieb
- 27: Temperatur - Sensor

## Patentansprüche

1. Vorrichtung zum Verschweißen zweier Fügepartner mittels Rührreibschweißen, durch die keinerlei Kontamination der Fügepartner durch Schweiß-Rückstände erfolgt, mit den folgenden Merkmalen:
a) einem in beliebige Maschinen integrierbaren Schweißkopf in der Form eines von einer Antriebseinheit (1) angetriebenen Spindelgetriebes (4) mit einem Montageflansch (5) zur Befestigung von, den Schweißprozess unterstützenden, Einrichtungen und einem Spannsystem (8) zur Aufnahme einer Werkzeugglocke (9) mit einem Schweiß- und Glättschuh (10) zur Führung eines Schweißpins (11),
und **gekennzeichnet durch** folgende Merkmale :
b) einer, in dem Schweiß- und Glättschuh (10) integrierten Einrichtung (14) zum Zerkleinern des beim Schweißprozess entstehenden Abriebs, wobei Mittel zum Entfernen dieses Abriebs ohne Kontamination der Fügepartner vorgesehen sind,
c) einer, in dem Schweißkopf integrierten Einrichtung (7) zur vertikalen Achsial-Verstellung der Werkzeugglocke (9), und
d) einem, in die Werkzeugglocke (9) integrierten Temperatursensor (27), wobei die Temperatur der Werkzeugglocke (9) mittels Zufuhr und Abfuhr von Fluid geregelt werden kann.

2. Vorrichtung nach Anspruch 1, **dadurch gekennzeichnet,**
**dass** das Zerkleinern des beim Schweißprozess entstehenden Abriebs mittels eines Schneidblatt-Halters (16) mit einem daran befestigten Schneidblatt (17) geschieht.

3. Vorrichtung nach einem der Ansprüche 1 oder 2, **dadurch gekennzeichnet,**
**dass** unterhalb des Montageflanschs (5) ein Sensorring (6) angeordnet ist, der Sensoren zur Kraftmessung, zur Messung der direkten Prozessparameter und/oder zur Schwingungsmessung trägt.

4. Vorrichtung nach einem der vorangehenden Ansprüche, **dadurch gekennzeichnet,**
**dass** der beim Schweißprozess entstehende Abrieb mittels jeweils eines im oberen und/oder unteren Bereich der Werkzeugglocke (9) angeordneten Einströmkanals für Fluid (20, 18) und eines Absaugkanals (19) entfernt wird.

5. Vorrichtung nach einem der vorangehenden Ansprüche, **dadurch gekennzeichnet,**
**dass** in den Schweißkopf mindestens ein Kabelkanal (22) zu den im Schweißkopf integrierten Sensoren führt.

6. Verfahren zum Verschweißen zweier Fügepartner mittels Rührreibschweißen, durch die keinerlei Kontamination der Fügepartner durch Schweiß-Rückstände erfolgt, **gekennzeichnet durch** die folgenden Merkmale :
a) in einem, in beliebige Maschinen integrierbaren Schweißkopf in der Form eines von einer Antriebseinheit (1) angetriebenen Spindelgetriebes (4) mit einem Montageflansch (5) zur Befestigung von, den Schweißprozess unterstützenden, Einrichtungen und einem Spannsystem (8) zur Aufnahme einer Werkzeugglocke (9) mit einem Schweiß- und Glättschuh (10) zur Führung eines Schweißpins (11) wird dafür gesorgt, dass in dem Schweiß- und Glättschuh (10) eine integrierte Einrichtung (14) zum Zerkleinern des beim Schweißprozess entstehenden Abriebs vorgesehen ist, und
b) der beim Schweißprozess entstehende Abrieb wird sodann mittels jeweils eines, im oberen und/oder unteren Bereich der Werkzeugglocke (9) angeordneten, Einströmkanals für Fluid (20, 18) und eines Absaugkanals (19) entfernt.

7. Verfahren nach Anspruch 6, **dadurch gekennzeichnet,**
**dass** das Zerkleinern des beim Schweißprozess entstehenden Abriebs mittels eines Schneidblatt-Halters (16) mit einem daran befestigten Schneidblatt (17) geschieht.

## Claims

1. Device for welding two joining partners by means of friction stir welding, which prevents the joining partners from being contaminated at all by welding residues, having the following features:
a) a welding head which can be integrated in any machines in the form of a spindle drive (4) which is driven by a drive unit (1) having an assembly flange (5) for securing devices which support the welding process and a clamping system (8) for receiving a tool cover (9) having a welding and smoothing shoe (10) for guiding a welding pin (11),
and **characterized by** the following features:
b) a device (14) which is integrated in the welding and smoothing shoe (10) for crushing the abraded material which is produced during the welding process, wherein means for removing this abraded material without contamination of the joining partners are provided,
c) a device (7) which is integrated in the welding head for vertical axial adjustment of the tool cover (9), and
d) a temperature sensor (27) which is integrated in the tool cover (9), wherein the temperature of the tool cover (9) can be controlled by means of the supply and discharge of fluid.

2. Device according to Claim 1, **characterized in that** the crushing of the abraded material which is produced during the welding process is carried out by means of a cutting blade retention member (16) with a cutting blade (17) which is secured thereto.

3. Device according to either of Claims 1 and 2, **characterized in that**
there is arranged below the assembly flange (5) a sensor ring (6) which carries sensors for measuring force, for measuring the direct process parameters and/or for oscillation measurement.

4. Device according to one of the preceding claims, **characterized in that**
the abraded material which is produced during the welding process is removed by means of in each case an influx channel for fluid (20, 18) which is arranged in the upper and/or lower region of the tool cover (9) and an outlet channel (19).

5. Device according to one of the preceding claims, **characterized in that**
in the welding head at least one cable channel (22) leads to the sensors which are integrated in the welding head.

6. Method for welding two joining partners by means of friction stir welding, which prevents the joining partners from being contaminated at all by welding residues,
**characterized by** the following features:
a) in a welding head which can be integrated in any machines in the form of a spindle drive (4) which is driven by a drive unit (1) having an assembly flange (5) for securing devices which support the welding process and a clamping system (8) for receiving a tool cover (9) having a welding and smoothing shoe (10) for guiding a welding pin (11), it is ensured that in the welding and smoothing shoe (10) an integrated device (14) is provided for crushing the abraded material which is produced during the welding operation, and
b) the abraded material which is produced during the welding process is then removed by means of in each case an influx channel for fluid (20, 18) which is arranged in the upper and/or lower region of the tool cover (9) and an outlet channel (19).

7. Method according to Claim 6, **characterized in that** the crushing of the abraded material which is produced during the welding process is carried out by means of a cutting blade retention member (16) with a cutting blade (17) which is secured thereto.

## Revendications

1. Dispositif pour le soudage de deux partenaires à assembler par soudage par friction-malaxage, grâce auquel aucune contamination des partenaires à assembler par des résidus de soudage n'a lieu, présentant les caractéristiques suivantes :
a) une tête de soudage intégrable dans des machines quelconques sous la forme d'un mécanisme à broche (4) entraîné par une unité d'entraînement (1) comprenant une bride de montage (5) servant à fixer des dispositifs d'aide au processus de soudage et un système de serrage (8) destiné à recevoir une cloche d'outil (9) munie d'un patin de soudage et de lissage (10) servant au guidage d'une tige de soudage (11),
et **caractérisé par** les caractéristiques suivantes :
b) un dispositif (14) intégré dans le patin de soudage et de lissage (10) pour le broyage des débris d'abrasion formés lors du processus de soudage, des moyens pour l'élimination de ces débris d'abrasion sans contamination des partenaires à assembler étant prévus,
c) un dispositif (7) intégré dans la tête de soudage, pour le déplacement axial vertical de la cloche d'outil (9), et
d) un capteur de température (27) intégré dans la cloche d'outil (9), la température de la cloche d'outil (9) pouvant être ajustée par introduction et déchargement d'un fluide.

2. Dispositif selon la revendication 1, **caractérisé en ce que** le broyage des débris d'abrasion formés lors du processus de soudage a lieu au moyen d'un support à lame coupante (16) sur lequel est fixée une lame coupante (17).

3. Dispositif selon l'une quelconque des revendications 1 ou 2, **caractérisé en ce qu'**un anneau de détection (6) est agencé sous la bride de montage (5), et porte des capteurs pour la mesure de forces, pour la mesure des paramètres directs du processus et/ou pour la mesure d'oscillations.

4. Dispositif selon l'une quelconque des revendications précédentes, **caractérisé en ce que** les débris d'abrasion formés lors du processus de soudage sont éliminés au moyen respectivement d'un canal d'entrée de fluide (20, 18) agencé dans la zone supérieure et/ou inférieure de la cloche d'outil (9), et d'un canal d'aspiration (19).

5. Dispositif selon l'une quelconque des revendications précédentes, **caractérisé en ce qu'**au moins un canal à câble (22) dans la tête de soudage conduit aux capteurs intégrés dans la tête de soudage.

6. Procédé de soudage de deux partenaires à assembler par soudage par friction-malaxage, grâce auquel aucune contamination des partenaires à assembler par des résidus de soudage n'a lieu, **caractérisé par** les caractéristiques suivantes :
a) dans une tête de soudage intégrable dans des machines quelconques sous la forme d'un mécanisme à broche (4) entraîné par une unité d'entraînement (1) comprenant une bride de montage (5) servant à fixer des dispositifs d'aide au processus de soudage et un système de serrage (8) destiné à recevoir une cloche d'outil (9) munie d'un patin de soudage et de lissage (10) servant au guidage d'une tige de soudage (11), un dispositif (14) intégré dans le patin de soudage et de lissage (10) permet le broyage des débris d'abrasion formés lors du processus de soudage, et
b) les débris d'abrasion formés lors du processus de soudage sont ensuite éliminés au moyen respectivement d'un canal d'entrée de fluide (20, 18), agencé dans la partie supérieure et/ou inférieure de la cloche d'outil (9), et d'un canal d'aspiration (19).

7. Procédé selon la revendication 6, **caractérisé en ce que** le broyage des débris d'abrasion formés lors du processus de soudage a lieu au moyen d'un support à lame coupante (16) sur lequel est fixée une lame coupante (17).
